# EUROPÄISCHE PATENTSCHRIFT

(11) **EP 3 546 144 B1**
(45) Veröffentlichungstag und Bekanntmachung des Hinweises auf die Patenterteilung: **27.11.2024**
(21) Anmeldenummer: 19156800.5
(22) Anmeldetag: 12.02.2019
(51) Int. Cl.: B25J 18/00, B25J 9/00, B25J 9/04, B25J 9/12, B25J 19/00

(54) **MANIPULATOREINRICHTUNG**
MANIPULATOR DEVICE
DISPOSITIF MANIPULATEUR

(30) Priorität: 26.03.2018 DE 102018107142
(43) Veröffentlichungstag der Anmeldung: 02.10.2019
(73) Patentinhaber: M-Robot OHG, 88074 Meckenbeuren (DE)
(72) Erfinder: Bartsch, Patrick, 88074 Meckenbeuren (DE); Brissé, Dirk, 88079 Kressbronn (DE)
(74) Vertreter: Schorr, Peter Karl

(56) Entgegenhaltungen:
- EP-A1- 0 213 318
- EP-B1- 0 213 318
- WO-A1-2017/177341
- WO-A1-93/11914
- DE-A1- 2 228 598
- FR-A1- 2 617 751
- JP-A- S61 288 985
- US-A- 4 651 591
- US-A- 4 907 467
- US-A- 5 155 423
- US-A1- 2006 182 601
- US-A1- 2017 047 792

## Beschreibung

Die Erfindung betrifft eine Manipulatoreinrichtung, wie Industrieroboter, durch die Kräfte und Momente einer Last aufnehmbar sind, mit mindestens einem Manipulatorarm, der mindestens zwei relativ zueinander bewegliche Armkörper aufweist, mit mindestens einem zwischen jeweils zwei Armkörpern angeordneten Gelenk, durch das die beiden Armkörper relativ zueinander um eine Dreh- oder Schwenkachse drehbar sind, und mit mindestens einer Antriebseinheit, die mindestens ein elektromagnetisches Antriebsmittel umfasst, welches am Manipulatorarm im Bereich des Gelenks angeordnet sowie dem Gelenk zuordenbar oder zugeordnet ist und welches mindestens einen drehfest an einem der beiden Armkörper angeordneten Stator und mindestens einen drehfest an dem weiteren der beiden Armkörper angeordneten Rotor aufweist, die um eine parallel zur Dreh- oder Schwenkachse des Gelenks, insbesondere mit dieser fluchtend, verlaufende Antriebsachse relativ zueinander drehbar und relativ zueinander festlegbar sind, wobei die Antriebsachse des elektromagnetischen Antriebsmittels im Wesentlichen quer zur Längserstreckungsrichtung des einen Armkörpers und/oder des Weiteren Armkörpers verläuft.

Manipulatoreinrichtungen sind beispielsweise im industriellen Umfeld als Industrieroboter oder Dergleichen bekannt. Diese dienen dazu, Greifgegenstände, wie Werkzeuge, Werkstücke und Dergleichen von einem Ort zu einem anderen Ort zu überführen.

Darüber hinaus sind Manipulatoreinrichtungen in Form von Maschinen oder Werkzeugmaschinen bekannt, die der Bearbeitung von Greifgegenständen, beispielsweise von Werkstücken und Bauteilen aus unterschiedlichsten Materialien dienen.

Um die Erreichbarkeit der Greifgegenstände zu erhöhen, umfassen die bekannten Manipulatoreinrichtungen mehrere Achsen, um die die Armkörper bewegbar sind, was zu einer Erhöhung der Bewegungsfreiheit der Manipulatoreinrichtung führt.

Die überwiegende Zahl der bekannten Manipulatoreinrichtungen umfasst zur Ansteuerung der unterschiedlichen Achsen mechanisches Getriebe. Aufgrund herstellungsbedingter Fertigungstoleranzen der einzelnen Bauteile der Getriebe, ist hierdurch die Genauigkeit der Anordnung derartiger Manipulatoreinrichtungen begrenzt.

Eine gattungsgemäße Manipulatoreinrichtung ist bekannt aus US 2016/0263749 A1, US 4,907,467 A, US 2017/0047792 A1 und WO 2017/177341 A1.

Eine nicht gattungsgemäße Manipulatoreinrichtung ist bekannt aus US 5,155,423 A, bei der weder Stator noch Rotor der Antriebseinheit an einem der Armkörper angeordnet ist.

Aus US 4,904,148 ist eine nicht gattungsgemäße Manipulatoreinrichtung mit elektromagnetischem Antriebsmittel bekannt, bei der jeweils ein elektromagnetisches Antriebsmittel um eine schräg zur Längserstreckungsachse der einzelnen Armkörper verlaufend, angeordnet ist. Die durch die Manipulatoreinrichtung aufgenommenen Lasten führen hierdurch zu hohen Drehmomenten, die an den Gelenken und an den Antriebseinheiten wirken, was den Verschleiß der einzelnen Komponenten der Manipulatoreinrichtung erhöht und die Genauigkeit der Ausrichtung und Positionierung der einzelnen Komponenten der Manipulatoreinrichtung reduziert.

Eine Aufgabe eines Ausführungsbeispiels der Erfindung ist, eine Manipulatoreinrichtung vorzuschlagen, bei der die Genauigkeit der Positionierung der einzelnen Komponenten der Manipulatoreinrichtung erhöht ist.

Diese Aufgabe wird bei einer eingangs genannten Manipulatoreinrichtung dadurch gelöst, dass mindestens einer der mindestens zwei Armkörper einen nach außen offenen und in oder quer zur Längserstreckungsrichtung des Armkörpers erstreckten Hohlraum umfasst, der in einem Hohlraum eines angrenzenden und über das Gelenk mit dem Armkörper verbundenen weiteren Armkörper mündet und/oder übergeht, sowie dass entweder die Antriebseinheit zwischen den beiden Armköpern ein einziges Antriebsmittel umfasst, wobei das Antriebsmittel der Antriebseinheit derart zwischen dem einen der beiden Armkörper und dem weiteren der beiden Armkörper angeordnet ist, dass der Schwerpunkt des Antriebsmittels der Antriebseinheit und der Schwerpunkt des Systems aus Armkörper und weiterem Armkörper auf derselben Ebene quer zur Antriebsachse angeordnet sind, oder die Antriebseinheit mindestens zwei parallel zueinander angeordnete Antriebsmittel umfasst, die derart zwischen dem beiden Armköpern angeordnet sind, dass ihre jeweiligen Antriebsachsen im Wesentlichen deckungsgleich zueinander verlaufen, und derart, dass der Schwerpunkt des Systems aus den beiden Antriebsmitteln der Antriebseinheit und der Schwerpunkt des Systems aus den beiden Armkörper auf derselben Ebene quer zur gemeinsamen Antriebsachse der beiden Antriebsmittel angeordnet sind.

Dadurch, dass die Antriebsachse des elektromagnetischen Antriebsmittels im Wesentlichen quer zur Längserstreckungsrichtung des einen Armkörpers und/oder des zweiten Armkörpers verläuft, sind die auf das Gelenk wirkenden Momente und Torsionskräfte reduziert.

Das Gelenk kann beispielsweise ein Lager, wie Kugellager, Trommellager und/oder Gleitlager umfassen. Solchenfalls kann beispielsweise der Innenring eines Lagers an dem einen der beiden Armkörper angeordnet sein, insbesondere drehfest festgelegt sein, und der Außenring an dem weiteren Armkörper der beiden Armkörper angeordnet, insbesondere drehfest festgelegt, sein.

Darüber hinaus kann das Gelenk eine Kinematik umfassen, die aus mehreren Lagern mit jeweils eigener Drehachse gebildet ist. Solchenfalls umfasst die Drehachse des Gelenks eine Schwenkachse.

Durch die Anordnung der mindestens einen Antriebseinheit lassen sich die auf das mindestens eine Gelenk wirkenden Momente und Torsionskräfte weiter reduzieren.

Mit anderen Worten wird die Antriebseinheit derart ausgebildet, dass der Schwerpunkt der Antriebseinheit mit dem Schwerpunkt des Systems aus den beiden Armkörpern auf derselben Ebene quer zur Antriebsachse, bzw. gemeinsamen Antriebsachse angeordnet ist. Solchenfalls ist ein Antriebsmittel der Antriebseinheit zentrisch angeordnet, wenn die Antriebseinheit lediglich ein einziges Antriebsmittel umfasst. Wenn die Antriebseinheit mindestens zwei Antriebsmittel umfasst, sind diese parallel und mit gleichem Abstand zum gemeinsamen Schwerpunkt zueinander beabstandet angeordnet.

Grundsätzlich ist es denkbar, dass mindestens eine Antriebseinheit der Manipulatoreinrichtung ein Getriebe umfasst. Die Genauigkeit des Anordnens der einzelnen Komponenten der Manipulatoreinrichtung, insbesondere der beiden Armkörper, lässt sich weiter steigern, wenn das mindestens eine elektromagnetische Antriebsmittel der Antriebseinheit einen Direktantrieb umfasst, der insbesondere durch eine Steuereinheit, wie Absolutwertgeber, zum Bewegen und/oder Festlegen des mindestens einen Rotor zum mindestens einen Stator ansteuerbar ist.

Solchenfalls ist ein Winkel zwischen der Längserstreckungsrichtung des einen Armkörpers und der Längserstreckungsrichtung des weiteren Armkörpers direkt einstellbar. Hierdurch kann auf das Vorsehen von Messelementen, mit denen beispielsweise ein Winkel zwischen den beiden Armkörpern und/oder eine Ausrichtung des Armkörpers zum weiteren Armkörper erfassbar und korrigierbar ist, verzichtet werden. Dieses ermöglicht ein bauteilreduziertes Ausgestalten der Manipulatoreinrichtung.

Grundsätzlich ist es denkbar, dass das Gelenk derart ausgebildet ist, dass die beiden Armkörper jeweils einseitig gelagert sind. Die auf das Gelenk wirkenden Momente und Torsionskräfte, lassen sich weiter reduzieren, wenn das Gelenk mindestens ein Lagermittel umfasst, das derart zwischen dem einen der beiden Armkörper und dem weiteren der beiden Armkörper angeordnet ist, dass der Schwerpunkt des Lagermittels des Gelenks und der Schwerpunkt des Systems aus Armkörper und weiterem Armkörper auf derselben Ebene quer zur Dreh- oder Schwenkachse angeordnet sind und/oder dass das Gelenk mindestens zwei parallel zueinander angeordnete Lagermittel umfasst, die derart zwischen dem beiden Armköpern angeordnet sind, dass ihre jeweiligen Dreh- oder Schwenkachsen im Wesentlichen deckungsgleich zueinander verlaufen, und derart, dass der Schwerpunkt des Systems aus den beiden Lagermitteln des Gelenks und der Schwerpunkt des Systems aus den beiden Armkörpern auf derselben Ebene quer zur gemeinsamen Dreh oder Schwenksachse der beiden Lagermittel angeordnet sind.

Solchenfalls sind die beiden Armkörper entweder zentrisch durch das Gelenk gelagert oder beidseitig durch das Gelenk gelagert.

Um die Stabilität der Manipulatoreinrichtung zu erhöhen, erweist es sich als vorteilhaft, wenn mindestens einer der mindestens zwei Armkörper mindestens ein, insbesondere zwei, gerüstartiges Tragmittel, durch das quer zur Dreh- oder Schwenkachse des Gelenks wirkende Kräfte aufnehmbar sind, und/oder mindestens ein, insbesondere zwei, Stützmittel umfasst, das am gerüstartigen Tragmittel anliegt und es zumindest nahezu oder abschnittsweise umgibt und durch das in Richtung der Dreh- oder Schwenkachse wirkende Kräfte aufnehmbar sind.

Dadurch, dass mindestens einer der mindestens zwei Armkörper mindestens ein Tragmittel und mindestens ein Stützmittel umfasst, können Tragmittel und Stützmittel bezüglich Geometrie und Material bedarfsgerecht und gewichtsreduziert ausgebildet werden.

In Weiterbildung letztgenannter Ausführungsform der Manipulatoreinrichtung hat es sich als zweckmäßig herausgestellt, wenn mindestens ein Rotor und/oder mindestens ein Stator mindestens eines Antriebsmittels der Antriebseinheit an dem gerüstartigen Tragmittel drehfest festlegbar oder festgelegt ist, wenn das zwischen dem mindestens einen der beiden Armkörper und dem weiteren Armkörper angeordnete Gelenk zumindest teilweise an dem mindestens einen gerüstartigen Tragmittel angeordnet ist und/oder wenn das gerüstartige Tragmittel quer zur Längserstreckungsrichtung des Armkörpers eine Dicke von 1 bis 40 mm, insbesondere 1,5 bis 30 mm, insbesondere 2 bis 20 mm, umfasst.

Hierdurch werden die kräfteübertragenden Bauteile, wie Gelenk und Antriebseinheit, mit dem kräfteaufnehmenden und weiterleitenden Tragmittel verbunden. Dieses kann für die zu erwartenden Lastfälle bezüglich seiner Höhe, Breite und Länge optimiert ausgebildet werden.

Insbesondere erweist es sich als zweckmäßig, wenn die Manipulatoreinrichtung in einer Tragklasse von 100 bis 150 kg ausgelegt ist und solchenfalls das Tragmittel eine, quer zur Längserstreckungsrichtung erstreckte, Dicke von 2 bis 20 mm umfasst.

Die Manipulatoreinrichtung ist kompakt ausbildbar, wenn das mindestens eine gerüstartige Tragmittel ein Metall, insbesondere Aluminium, und/oder das Stützmittel einen Kunststoff und/oder ein kohlenstofffaserverstärktes Bauteil umfasst. Hierdurch ist eine Hybridbauweise ermöglicht.

Ferner ist bei einer Ausführungsform der Manipulatoreinrichtung vorgesehen, dass mindestens einer der mindestens zwei Armkörper einen nach außen verschlossenen und in oder quer zur Längserstreckungsrichtung des Armkörpers erstreckten Hohlraum umfasst, der insbesondere in einem Hohlraum eines angrenzenden und über das Gelenk mit dem Armkörper verbundenen weiteren Armkörper mündet und/oder übergeht.

Hierdurch ist die Manipulatoreinrichtung gewichtsreduziert herstellbar.

Der Hohlraum kann sich beispielsweise zwischen zwei parallel zueinander angeordneten Antriebsmitteln der Antriebseinheit und zwei parallel zueinander angeordneten Lagermitteln des Gelenks erstreckend angeordnet sein. Ferner kann sich der Hohlraum quer zur Dreh- oder Schwenkachse des Gelenks durchgehend durch den mindestens einen Armkörper erstrecken oder tunnelartig oder nutartig im Armkörper angeordnet sein.

Bei einer Weiterbildung letztgenannter Ausführungsform umfasst die Manipulatoreinrichtung mindestens ein schlauch- oder kabelartiges Zuführmittel, durch das Energie, insbesondere in elektrischer, pneumatischer oder hydraulischer Form, fließbar und/oder transportierbar ist, und das in dem Hohlraum anordenbar oder angeordnet ist und mindestens ein, insbesondere elektrisches, pneumatisches oder hydraulisches, Anschlussmittel, das im Hohlraum des Armkörpers anordenbar ist und durch das die Antriebseinheit oder ein Manipulatorelement, wie Greifer oder Werkzeug, mit dem Zuführmittel verbindbar oder verbunden ist.

Solchenfalls können schlauch- oder kabelartige Zuführmittel innerhalb der Manipulatoreinrichtung geführt werden. Hierdurch ist die Wahrscheinlichkeit eines Hängenbleibens, oder Abreißens des Schlauchpaketes, Stolperns oder Verletzen von Bedienpersonen reduziert.

In dem schlauch- oder kabelartigen Zuführmittel kann beispielsweise elektrische Energie zum Betreiben der Antriebseinheiten oder des Manipulatorelements geführt werden. Darüber hinaus kann zusätzlich oder alternativ hierzu ein schlauchartiges Zuführmittel ein Fluid an ein als Werkzeug ausgebildetes Manipulatorelement geführt werden.

Grundsätzlich ist es denkbar, dass die Manipulatoreinrichtung lediglich zwei Armkörper umfasst. Allerdings sind Ausführungsformen der Manipulatoreinrichtung denkbar, die bezüglich der Anzahl ihrer Armkörper, ihrer Gelenke und/oder ihrer Antriebseinheiten vielfältig ausgestaltbar ist. Solchenfalls erweist es sich als vorteilhaft, wenn der Manipulatorarm mehrachsig ausgebildet ist und der mindestens eine der beiden Armkörper einen n-ten Armkörper und der weitere der beiden Armkörper einen (n+1)-ten Armkörper umfasst, wobei der (n+1)-te Armkörper um ein n-tes Gelenk mit einer n-ten Dreh- oder Schwenkachse drehbar festgelegt ist und/oder am n-ten Gelenk mindestens ein, insbesondere elektromagnetisches, Antriebsmittel einer n-ten Antriebseinheit anordenbar oder angeordnet ist.

Hierbei stellt "n" eine natürliche Zahl zwischen 1 bis unendlich dar. Entsprechend bedeutet der Ausdruck "(n+1)" eine Zahl, die die natürliche Zahl "n" von 1 bis unendlich umfasst, um "1" addiert ist.

Bei einer speziellen Ausführungsform kann daher vorgesehen sein, dass ein erster Armkörper an einem Sockel um ein eine erste Dreh- oder Schwenkachse umfassendes erstes Gelenk drehbar festgelegt ist, ein zweiter Armkörper am ersten Armkörper um ein eine zweite Dreh- oder Schwenkachse umfassendes zweites Gelenk drehbar festgelegt, ein dritter Armkörper am zweiten Armkörper um ein eine dritte Dreh- oder Schwenkachse umfassendes drittes Gelenk drehbar festgelegt, ein vierter Armkörper am dritten Armkörper um ein eine vierte Dreh- oder Schwenkachse umfassendes viertes Gelenk drehbar festgelegt und ein fünfter Armkörper am vierten Armkörper um ein eine fünfte Dreh- oder Schwenkachse umfassendes fünftes Gelenk drehbar festgelegt, wobei zumindest am zweiten Gelenk, dritten Gelenk und/oder fünften Gelenk eine der mindestens einen Antriebseinheit mit mindestens einem elektromagnetischen Antriebsmittel anordenbar oder angeordnet ist.

Ferner sind Ausführungsformen denkbar, bei denen zusätzlich zum zweiten, dritten und fünften Gelenk auch das erste, vierte und sechste Gelenk eine Antriebseinheit mit mindestens einem elektromagnetischen Antriebsmittel umfassen kann.

Um die Sicherheit der Manipulatoreinrichtung zu erhöhen, kann an mindestens einem Gelenk, an dem mindestens ein elektromagnetisches Antriebsmittel angeordnet ist, ein mechanisches Bremsmittel angeordnet sein, dass zumindest den einen Armkörper gegenüber dem weiteren Armkörper drehfest festlegt, wenn das Antriebsmittel stromlos ist. Hierdurch wird einem unbeabsichtigten Bewegen der Armkörper im stromlosen Zustand vorgebeugt.

Ferner erweist es sich als vorteilhaft, wenn mindestens ein Armkörper des Manipulatorarms, insbesondere der zweite Armkörper, quer zur Dreh- oder Schwenkachse des Gelenks betrachtet einen bogenförmigen, insbesondere C-förmigen, Querschnitt umfasst.

Durch das Ausbilden des mindestens einen Armkörpers mit einem bogenförmigen, insbesondere C-förmigen, Querschnitt, kann die Erreichbarkeit beim relativen Bewegen eines Armkörpers zum anderen Armkörper erhöht werden. Darüber hinaus ist hierdurch ein Anordnen des schlauch- oder kabelartigen Zuführmittels innerhalb des Hohlraums erleichtert.

Schließlich erweist es sich als vorteilhaft, wenn mindestens ein Armkörper des Manipulatorarms die mindestens eine Antriebseinheit und das Gelenk bezüglich einer Ebene quer zur Dreh- oder Schwenkachse des Gelenks, in der der jeweilige Schwerpunkt angeordnet ist, im Wesentlichen symmetrisch, insbesondere spiegelsymmetrisch ausgebildet ist.

Hierdurch ist eine symmetrische, insbesondere spiegelsymmetrische Ausgestaltung der Manipulatoreinrichtung erstellbar. Hierdurch sind die auf die Gelenke wirkenden Momente und Torsionskräfte weiter reduziert.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Manipulatoreinrichtung.

In der Zeichnung zeigt:
- Figur 1: Eine perspektivische Seitenansicht auf ein erstes Ausführungsbeispiel der Manipulatoreinrichtung;
- Figur 2: Eine perspektivische Seitenansicht auf das Ausführungsbeispiel gemäß Figur 1 in einer transparenten Darstellung.

Die Figuren zeigen eine insgesamt mit dem Bezugszeichen 2 versehene Manipulatoreinrichtung, wie Industrieroboter. Durch die Manipulatoreinrichtung 2 sind Kräfte und Momenten einer Last (in den Figuren nicht dargestellt) aufnehmbar.

Die Manipulatoreinrichtung 2 umfasst einen Manipulatorarm 4, der bei dem in den Figuren dargestellten Ausführungsbeispiel eine Mehrzahl von Armkörpern 6 aufweist, die jeweils relativ zu ihren benachbarten Armkörpern 6 durch ein Gelenk 8 um eine Dreh- oder Schwenkachse 10 drehbar sind.

Zum Bewegen eines Armkörpers 6 des Manipulatorarms 4 relativ zu einem weiteren Armkörper 6 des Manipulatorarms 4, ist an den Gelenken 8 eine Antriebseinheit 12 vorgesehen, die bei dem in den Figuren gezeigten Ausführungsbeispiel jeweils zwei elektromagnetische Antriebsmittel 14 umfasst.

Die jeweilige Antriebseinheit 12 ist am Manipulatorarm 4 jeweils im Bereich eines Gelenks 8 angeordnet und umfasst einen Stator 16, der an einem der Armkörper 6 festgelegt ist und einen relativ zum Stator 16 bewegbaren Rotor 18, der an einem weiteren Armkörper 6 festgelegt ist und durch deren relatives zueinander Verdrehen auch die jeweils am Rotor 18 und Stator 16 festgelegten Armkörper relativ zueinander bewegt werden. In den Figuren sind Stator 16 und Rotor 18 nicht explizit dargestellt.

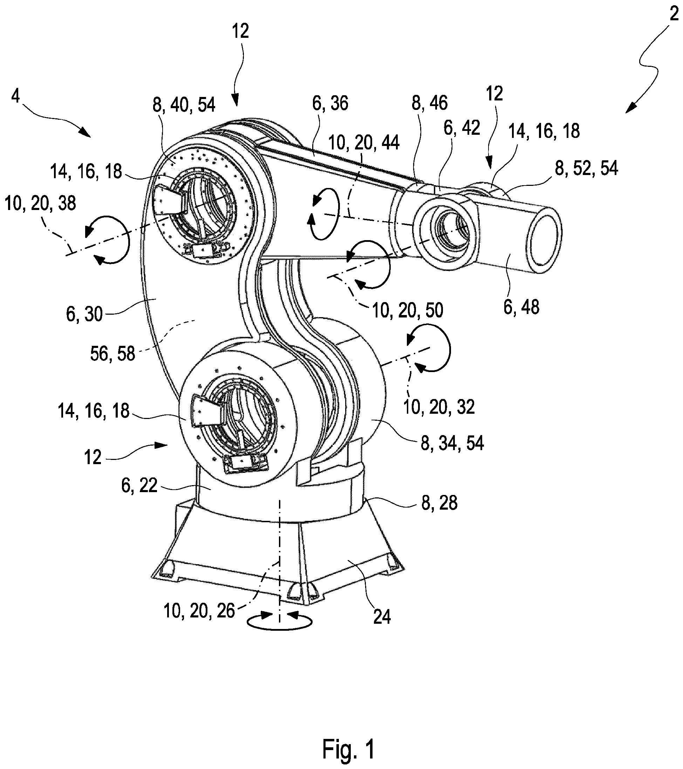

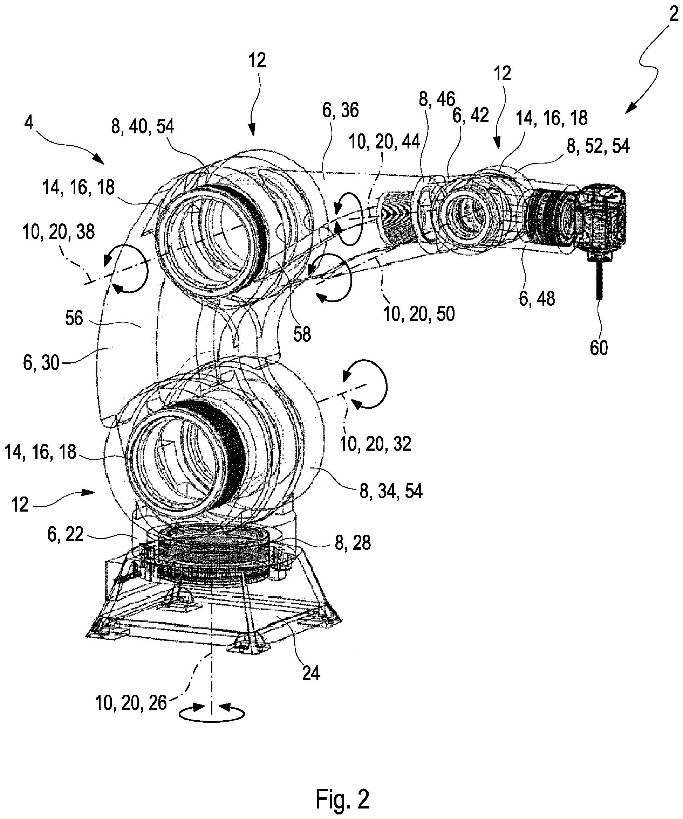

Die Antriebsmittel 14 der Antriebseinheit 12 umfassen dabei jeweils eine Antriebsachse 20, die bei dem in den Figuren 1 und 2 dargestellten Ausführungsbeispielen mit den Dreh- oder Schwenkachsen 10 der Gelenke 8 fluchten.

Die Figuren zeigen ein Ausführungsbeispiel der Manipulatoreinrichtung 2, bei der ein erster Armkörper 22 an einem Sockel 24 um eine erste Dreh- oder Schwenkachse 26 eines ersten Gelenks 28 drehbar festgelegt ist.

Ein zweiter Armkörper 30 ist am ersten Armkörper 22 um eine zweite Dreh- oder Schwenkachse 32 umfassendes Gelenk 34 drehbar festgelegt.

Ein dritter Armkörper 36 ist am zweiten Armkörper 30 um ein eine dritte Dreh- oder Schwenkachse 38 umfassendes drittes Gelenk 40 drehbar festgelegt.

Ein vierter Armkörper 42 ist am dritten Armkörper 36 um ein eine vierte Dreh- oder Schwenkachse 44 umfassendes viertes Gelenk 46 drehbar festgelegt.

Ein fünfter Armkörper 48 ist am vierten Armkörper 42 um ein eine fünfte Dreh- oder Schwenkachse 50 umfassendes Gelenk 52 drehbar festgelegt.

Bei dem in den Figuren gezeigten Ausführungsbeispiel ist zumindest am zweiten Gelenk 34, am dritten Gelenk 40 und am fünften Gelenk 52 jeweils eine Antriebseinheit 12 mit elektromagnetischen Antriebsmitteln 14 vorgesehen. Deren Antriebsachse 20 erstreckt sich quer zur Längserstreckungsrichtung des ersten Armkörpers 22, des zweiten Armkörpers 30, des dritten Armkörpers 36, des vierten Armkörpers 42 und des fünften Armkörpers 48.

Die in den Figuren gezeigten elektromagnetischen Antriebsmitteln 14 der Antriebseinheit 12 umfassen einen Direktantrieb, der durch eine Steuereinheit (in den Figuren nicht dargestellt), wie Absolutwertgeber, zum Bewegen und/oder Festlegen der Rotoren 18 relativ zu den Statoren 16 ansteuerbar ist.

Die Figuren 1 und 2 zeigen eine Ausführungsform der Manipulatoreinrichtung 2, bei der die einzelnen Komponenten im Wesentlichen spiegelsymmetrisch ausgebildet sind. Auch die Anordnung der einzelnen Komponenten ist derart, dass sich insgesamt eine spiegelsymmetrische Anordnung ergibt. So umfasst die Antriebseinheit 12 zumindest auf Höhe des zweiten Gelenks 34, des dritten Gelenks 40 und des fünften Gelenks 52 jeweils zwei Antriebsmittel 14, deren Schwerpunkt auf der Mittelachse der jeweils angrenzenden Armkörper 6 angeordnet ist. Gleiches gilt für die Gelenke 8. Hierbei umfasst das zweite Gelenk 34, das dritte Gelenk 40 und das fünfte Gelenk 52 jeweils zwei Lagermittel 54, die parallel zueinander verlaufend angeordnet sind und deren gemeinsamer Schwerpunkt auf den Mittellängsachsen der jeweils benachbarten Armkörper 6 liegt.

Darüber hinaus umfasst die Manipulatoreinrichtung 2 einen Hohlraum 56, der sich durch mehrere Armkörper 6 erstreckt. In dem Hohlraum 56 sind schlauch- oder kabelartige Zuführmittel 58 anordenbar (in den Figuren nicht explizit dargestellt), durch die Energie, insbesondere in Form von elektrischer, pneumatischer oder hydraulischer Energie, fließbar und/oder transportierbar ist.

Durch das schlauch- oder kabelartige Zuführmittel 58 sind die Antriebseinheiten 12 mit elektrischer Energie versorgbar. Darüber hinaus ist ein Manipulatorelement 60, wie Greifer oder Werkzeug, durch das schlauch- oder kabelartige Zuführmittel 58 an die Energie ankoppelbar.

Darüber hinaus zeigen die Figuren 1 und 2 eine Ausführungsform der Manipulatoreinrichtung 2, die quer zur Dreh- oder Schwenkachse 10 der Gelenke 8 einen bogenförmigen, insbesondere C-förmigen, Querschnitt aufweist.

### Bezugszeichenliste

- 2: Manipulatoreinrichtung
- 4: Manipulatorarm
- 6: Armkörper
- 8: Gelenk
- 10: Dreh- oder Schwenkachse
- 12: Antriebseinheit
- 14: Antriebsmittel
- 16: Stator
- 18: Rotor
- 20: Antriebsachse
- 22: erster Armkörper
- 24: Sockel
- 26: erste Dreh- oder Schwenkachse
- 28: erstes Gelenk
- 30: zweiter Armkörper
- 32: zweite Dreh- oder Schwenkachse
- 34: zweites Gelenk
- 36: dritter Armkörper
- 38: dritte Dreh- oder Schwenkachse
- 40: drittes Gelenk
- 42: vierter Armkörper
- 44: vierte Dreh- oder Schwenkachse
- 46: viertes Gelenk
- 48: fünfter Armkörper
- 50: fünfte Dreh- oder Schwenkachse
- 52: fünftes Gelenk
- 54: Lagermittel
- 56: Hohlraum
- 58: schlauch- oder kabelartiges Zuführmittel
- 60: Manipulatorelement

## Patentansprüche

1. Manipulatoreinrichtung (2) wie Industrieroboter, durch die Kräfte und Momente einer Last aufnehmbar sind, mit mindestens einem Manipulatorarm (4), der mindestens zwei relativ zueinander bewegliche Armkörper (6) aufweist, mit mindestens einem zwischen jeweils zwei Armkörpern (6) angeordneten Gelenk (8), durch das die beiden Armkörper (6) relativ zueinander um eine Dreh- oder Schwenkachse (10) drehbar sind, und mit mindestens einer Antriebseinheit (12), die mindestens ein elektromagnetisches Antriebsmittel (14) umfasst, welches am Manipulatorarm (4) im Bereich des Gelenks (8) angeordnet sowie dem Gelenk (8) zuordenbar oder zugeordnet ist und welches mindestens einen drehfest an einem der beiden Armkörper (6) angeordneten Stator (16) und mindestens einen drehfest an dem weiteren der beiden Armkörper (6) angeordneten Rotor (18) aufweist, die um eine parallel zur Dreh- oder Schwenkachse (10) des Gelenks (8), insbesondere mit dieser fluchtend, verlaufende Antriebsachse (20) relativ zueinander drehbar und relativ zueinander festlegbar sind, wobei die Antriebsachse (20) des elektromagnetischen Antriebsmittels (14) im Wesentlichen quer zur Längserstreckungsrichtung des einen Armkörpers (6) und/oder des weiteren Armkörpers (6) verläuft, **dadurch gekennzeichnet, dass** mindestens einer der mindestens zwei Armkörper (6) einen nach außen offenen und in oder quer zur Längserstreckungsrichtung des Armkörpers (6) erstreckten Hohlraum (56) umfasst, der in einem Hohlraum (56) eines angrenzenden und über das Gelenk (8) mit dem Armkörper (6) verbundenen weiteren Armkörper (6) mündet und/oder übergeht, sowie dass entweder die Antriebseinheit (12) zwischen den beiden Armköpern (6) ein einziges Antriebsmittel (14) umfasst, wobei das Antriebsmittel (14) der Antriebseinheit (12) derart zwischen dem einen der beiden Armkörper (6) und dem weiteren der beiden Armkörper (6) angeordnet ist, dass der Schwerpunkt des Antriebsmittels (14) der Antriebseinheit (12) und der Schwerpunkt des Systems aus Armkörper (6) und weiterem Armkörper (6) auf derselben Ebene quer zur Antriebsachse (20) angeordnet sind, oder die Antriebseinheit (12) mindestens zwei parallel zueinander angeordnete Antriebsmittel (14) umfasst, die derart zwischen den beiden Armköpern (6) angeordnet sind, dass ihre jeweiligen Antriebsachsen (20) im Wesentlichen deckungsgleich zueinander verlaufen, und derart, dass der Schwerpunkt des Systems aus den beiden Antriebsmitteln (14) der Antriebseinheit (12) und der Schwerpunkt des Systems aus den beiden Armkörper (6) auf derselben Ebene quer zur gemeinsamen Antriebsachse (20) der beiden Antriebsmittel (14) angeordnet sind.

2. Manipulatoreinrichtung (2) nach Anspruch 1, **dadurch gekennzeichnet, dass** das mindestens eine elektromagnetische Antriebsmittel (14) der Antriebseinheit (12) einen Direktantrieb umfasst, der insbesondere durch eine Steuereinheit, wie Absolutwertgeber, zum Bewegen und/oder Festlegen des mindestens einen Rotor (18) zum mindestens einen Stator (16) ansteuerbar ist.

3. Manipulatoreinrichtung (2) nach Anspruch 1 oder 2, **dadurch gekennzeichnet, dass** das Gelenk (8) mindestens ein Lagermittel (54) umfasst, das derart zwischen dem einen der beiden Armkörper (6) und dem weiteren der beiden Armkörper (6) angeordnet ist, dass der Schwerpunkt des Lagermittels (54) des Gelenks (8) und der Schwerpunkt des Systems aus Armkörper (6) und weiterem Armkörper (6) auf derselben Ebene quer zur Dreh- oder Schwenkachse (10) angeordnet sind und/oder dass das Gelenk (8) mindestens zwei parallel zueinander angeordnete Lagermittel (54) umfasst, die derart zwischen dem beiden Armköpern (6) angeordnet sind, dass ihre jeweiligen Dreh- oder Schwenkachsen (10) im Wesentlichen deckungsgleich zueinander verlaufen, und derart, dass der Schwerpunkt des Systems aus den beiden Lagermitteln (54) des Gelenks (8) und der Schwerpunkt des Systems aus den beiden Armkörpern (6) auf derselben Ebene quer zur gemeinsamen Dreh oder Schwenksachse (10) der beiden Lagermittel (54) angeordnet sind.

4. Manipulatoreinrichtung (2) nach mindestens einem der vorhergehenden Ansprüche, **dadurch gekennzeichnet, dass** mindestens einer der mindestens zwei Armkörper (6) mindestens ein, insbesondere zwei, gerüstartiges Tragmittel, durch das quer zur Dreh- oder Schwenkachse (10) des Gelenks (8) wirkende Kräfte aufnehmbar sind, und/oder mindestens ein, insbesondere zwei, Stützmittel umfasst, das am gerüstartigen Tragmittel anliegt und es zumindest nahezu oder abschnittsweise umgibt und durch das in Richtung der Dreh- oder Schwenkachse (10) wirkende Kräfte aufnehmbar sind.

5. Manipulatoreinrichtung (2) nach Anspruch 4, **dadurch gekennzeichnet, dass** mindestens ein Rotor (18) und/oder mindestens ein Stator (16) mindestens eines Antriebsmittels (14) der Antriebseinheit (12) an dem gerüstartigen Tragmittel drehfest festlegbar oder festgelegt ist, dass das zwischen dem mindestens einen der beiden Armkörper (6) und dem weiteren Armkörper (6) angeordnete Gelenk (8) zumindest teilweise an dem mindestens einen gerüstartigen Tragmittel angeordnet ist und/oder dass das gerüstartige Tragmittel quer zur Längserstreckungsrichtung des Armkörpers (6) eine Dicke von 1 bis 40 mm, insbesondere 1,5 bis 30 mm, insbesondere 2 bis 20 mm, umfasst.

6. Manipulatoreinrichtung (2) nach Anspruch 4 oder 5, **dadurch gekennzeichnet, dass** das mindestens eine gerüstartige Tragmittel ein Metall, insbesondere Aluminium, und/oder das Stützmittel einen Kunststoff und/oder ein kohlenstofffaserverstärktes Bauteil umfasst.

7. Manipulatoreinrichtung (2) nach mindestens einem der vorhergehenden Ansprüche, **dadurch gekennzeichnet, dass** mindestens einer der mindestens zwei Armkörper (6) einen nach außen verschlossenen und in oder quer zur Längserstreckungsrichtung des Armkörpers (6) erstreckten Hohlraum (56) umfasst, der insbesondere in einem Hohlraum (56) eines angrenzenden und über das Gelenk (8) mit dem Armkörper (6) verbundenen weiteren Armkörper (6) mündet und/oder übergeht.

8. Manipulatoreinrichtung (2) nach Anspruch 7, **gekennzeichnet durch** mindestens ein schlauch- oder kabelartiges Zuführmittel (58), durch das Energie, insbesondere in elektrischer, pneumatischer oder hydraulischer Form, fließbar und/oder transportierbar ist, und das in dem Hohlraum (56) anordenbar oder angeordnet ist und durch mindestens ein, insbesondere elektrisches, pneumatisches oder hydraulisches, Anschlussmittel, das im Hohlraum (56) des Armkörpers (6) anordenbar ist und durch das die Antriebseinheit (12) oder ein Manipulatorelement (60), wie Greifer oder Werkzeug, mit dem Zuführmittel verbindbar oder verbunden ist.

9. Manipulatoreinrichtung (2) nach mindestens einem der vorhergehenden Ansprüche, **dadurch gekennzeichnet, dass** der Manipulatorarm (4) mehrachsig ausgebildet ist und der mindestens eine der beiden Armkörper (6) einen n-ten Armkörper (6) und der weitere der beiden Armkörper (6) einen (n+1)-ten Armkörper (6) umfasst, wobei der (n+1)-te Armkörper (6) um ein n-tes Gelenk (8) mit einer n-ten Dreh- oder Schwenkachse (10) drehbar festgelegt ist und/oder am n-ten Gelenk (8) mindestens ein, insbesondere elektromagnetisches, Antriebsmittel (14) einer n-ten Antriebseinheit (12) anordenbar oder angeordnet ist.

10. Manipulatoreinrichtung (2) nach Anspruch 9, **dadurch gekennzeichnet, dass** ein erster Armkörper (22) an einem Sockel (24) um eine erste Dreh- oder Schwenkachse (26) umfassendes erstes Gelenk (28) drehbar festgelegt ist, ein zweiter Armkörper (30) am ersten Armkörper (22) um ein eine zweite Dreh- oder Schwenkachse (32) umfassendes zweites Gelenk (34) drehbar festgelegt, ein dritter Armkörper (36) am zweiten Armkörper (30) um ein eine dritte Dreh- oder Schwenkachse (38) umfassendes drittes Gelenk (40) drehbar festgelegt, ein vierter Armkörper (42) am dritten Armkörper (36) um ein eine vierte Dreh- oder Schwenkachse (44) umfassendes viertes Gelenk (46) drehbar festgelegt und ein fünfter Armkörper (48) am vierten Armkörper (42) um ein eine fünfte Dreh- oder Schwenkachse (50) umfassendes fünftes Gelenk (52) drehbar festgelegt, wobei zumindest am zweiten Gelenk (34), dritten Gelenk (40) und/oder fünften Gelenk (52) eine der mindestens einen Antriebseinheit (12) mit mindestens einem elektromagnetischen Antriebsmittel (14) anordenbar oder angeordnet ist.

11. Manipulatoreinrichtung (2) nach mindestens einem der vorhergehenden Ansprüche, **dadurch gekennzeichnet, dass** mindestens ein Armkörper (6) des Manipulatorarms (4) insbesondere der zweite Armkörper (30) quer zur Dreh- oder Schwenkachse (10) des Gelenks (8) betrachtet einen bogenförmigen, insbesondere C-förmigen Querschnitt umfasst.

12. Manipulatoreinrichtung (2) nach mindestens einem der vorhergehenden Ansprüchen, **dadurch gekennzeichnet, dass** mindestens ein Armkörper (6) des Manipulatorarms (4), die mindestens eine Antriebseinheit (12) und das Gelenk (8) bezüglich einer Ebene quer zur Dreh- oder Schwenkachse (10) des Gelenks (8), in der der jeweilige Schwerpunkt angeordnet ist, im Wesentlichen symmetrisch, insbesondere spiegelsymmetrisch ausgebildet ist.

## Claims

1. Manipulator device (2) such as an industrial robot, by means of which forces and moments of a load can be absorbed, with at least one manipulator arm (4), which has at least two arm bodies (6) movable relative to one another, with at least one joint (8) arranged between two arm bodies (6) in each case, by means of which the two arm bodies (6) can be rotated relative to one another about an axis of rotation or swivelling axis (10), and with at least one drive unit (12), which comprises at least one electromagnetic drive means (14), which is arranged on the manipulator arm (4) in the region of the joint (8) and can be assigned or is assigned to the joint (8) and which has at least one stator (16) arranged non-rotatably on one of the two arm bodies (6) and at least one rotor (18) arranged non-rotatably on the other of the two arm bodies (6), which can be rotated relative to one another and fixed relative to one another about a drive axis (20) extending parallel to the axis of rotation or swivelling axis (10) of the joint (8), in particular in alignment therewith, wherein the drive axis (20) of the electromagnetic drive means (14) extends substantially transversely to the longitudinal direction of extension of the one arm body (6) and/or the other arm body (6), **characterised in that** at least one of the at least two arm bodies (6) comprises a cavity (56) which is open to the outside and extends in or transversely to the longitudinal direction of extension of the arm body (6), which opens into and/or merges into a cavity (56) of an adjacent further arm body (6) connected to the arm body (6) via the joint (8), and **in that** either the drive unit (12) comprises a single drive means (14) between the two arm bodies (6), the drive means (14) of the drive unit (12) being arranged in such a way between one of the two arm bodies (6) and the other of the two arm bodies (6), **in that** the centre of gravity of the drive means (14) of the drive unit (12) and the centre of gravity of the system comprising arm body (6) and further arm body (6) are arranged on the same plane transverse to the drive axis (20) or the drive unit (12) comprises at least two drive means (14) arranged parallel to one another, which are arranged between the two arm bodies (6) in such a way that their respective drive axes (20) are substantially congruent with one another, and in such a way that the centre of gravity of the system comprising the two drive means (14) of the drive unit (12) and the centre of gravity of the system comprising the two arm bodies (6) are arranged on the same plane transverse to the common drive axis (20) of the two drive means (14).

2. Manipulator device (2) according to claim 1, **characterised in that** the at least one electromagnetic drive means (14) of the drive unit (12) comprises a direct drive, which can be controlled in particular by a control unit, such as an absolute encoder, for moving and/or fixing the at least one rotor (18) relative to the at least one stator (16).

3. Manipulator device (2) according to claim 1 or 2, **characterised in that** the joint (8) comprises at least one bearing means (54) arranged in such a way between one of the two arm bodies (6) and the other of the two arm bodies (6), **in that** the centre of gravity of the bearing means (54) of the joint (8) and the centre of gravity of the system comprising arm body (6) and further arm body (6) are arranged on the same plane transverse to the axis of rotation or swivelling axis (10) and/or **in that** the joint (8) comprises at least two bearing means (54) arranged parallel to one another, which are arranged in this way between the two arm bodies (6), that their respective axis of rotation or swivelling axes (10) are substantially congruent with one another, and in such a way that the centre of gravity of the system comprising the two bearing means (54) of the joint (8) and the centre of gravity of the system comprising the two arm bodies (6) are arranged on the same plane transverse to the common axis of rotation or pivot (10) of the two bearing means (54).

4. Manipulator device (2) according to at least one of the preceding claims, **characterised in that** at least one of the at least two arm bodies (6) has at least one, in particular two, frame-like support means, by which forces acting transversely to the axis of rotation or swivelling axis (10) of the joint (8) can be absorbed, and/or at least one, in particular two, support means which rests against the scaffold-like support means and surrounds it at least almost or in sections and by means of which forces acting in the direction of the axis of rotation or swivelling axis (10) can be absorbed.

5. Manipulator device (2) according to claim 4, **characterised in that** at least one rotor (18) and/or at least one stator (16) of at least one drive means (14) of the drive unit (12) can be fixed or secured in a rotationally fixed manner on the scaffold-like support means, **in that** the joint (8) arranged between the at least one of the two arm bodies (6) and the further arm body (6) is arranged at least partially on the at least one scaffold-like support means and/or **in that** the scaffold-like support means comprises a thickness of 1 to 40 mm, in particular 1.5 to 30 mm, in particular 2 to 20 mm, transversely to the longitudinal direction of extension of the arm body (6).

6. Manipulator device (2) according to claim 4 or 5, **characterised in that** the at least one scaffold-like support means comprises a metal, in particular aluminium, and/or the support means comprises a plastic and/or a carbon fibre-reinforced component.

7. Manipulator device (2) according to at least one of the preceding claims, **characterised in that** at least one of the at least two arm bodies (6) comprises a cavity (56) which is closed to the outside and extends in or transversely to the longitudinal direction of extension of the arm body (6) and which, in particular, opens into and/or merges into a cavity (56) of an adjacent further arm body (6) connected to the arm body (6) via the joint (8).

8. Manipulator device (2) according to claim 7, **characterised by** at least one hose or cable-like feed means (58) through which energy, in particular in electrical, pneumatic or hydraulic form, can flow and/or be transported, and which can be arranged or is arranged in the cavity (56) and by at least one, in particular electrical, pneumatic or hydraulic, connection means which can be arranged in the cavity (56) of the arm body (6) and by means of which the drive unit (12) or a manipulator element (60), such as a gripper or tool, can be connected or is connected to the feed means.

9. Manipulator device (2) according to at least one of the preceding claims, **characterised in that** the manipulator arm (4) is of multi-axis design and the at least one of the two arm bodies (6) comprises an nth arm body (6) and the other of the two arm bodies (6) comprises an (n+1)th arm body (6), wherein the (n+1)-the arm body (6) is rotatably fixed about an nth joint (8) with an nth axis of rotation or swivelling axis (10) and/or at least one, in particular electromagnetic, drive means (14) of an nth drive unit (12) can be arranged or is arranged on the nth joint (8).

10. Manipulator device (2) according to claim 9, **characterised in that** a first arm body (22) is fixed to a base (24) so as to be rotatable about a first joint (28) comprising a first axis of rotation or swivelling axis (26), a second arm body (30) is secured to the first arm body (22) so as to be rotatable about a second joint (34) comprising a second axis of rotation or swivelling axis (32), a third arm body (36) is secured to the second arm body (30) so as to be rotatable about a third joint (40) comprising a third axis of rotation or swivelling axis (38), a fourth arm body (42) is fixed to the third arm body (36) so as to be rotatable about a fourth joint (46) comprising a fourth axis of rotation or swivelling axis (44), and a fifth arm body (48) is fixed to the fourth arm body (42) so as to be rotatable about a fifth joint (52) comprising a fifth axis of rotation or swivelling axis (50), wherein one of the at least one drive unit (12) with at least one electromagnetic drive means (14) can be arranged or is arranged at least at the second joint (34), third joint (40) and/or fifth joint (52).

11. Manipulator device (2) according to at least one of the preceding claims, **characterised in that** at least one arm body (6) of the manipulator arm (4), in particular the second arm body (30), comprises an arched, in particular C-shaped cross-section when viewed transversely to the axis of rotation or swivelling axis (10) of the joint (8).

12. Manipulator device (2) according to at least one of the preceding claims, **characterised in that** at least one arm body (6) of the manipulator arm (4), the at least one drive unit (12) and the joint (8) are substantially symmetrical, in particular mirror-symmetrical, with respect to a plane transverse to the axis of rotation or swivelling axis (10) of the joint (8), in which the respective centre of gravity is arranged.

## Revendications

1. Dispositif manipulateur (2) tel qu'un robot industriel, par lequel des forces et des moments d'une charge peuvent être absorbés, avec au moins un bras manipulateur (4) qui présente au moins deux segments de bras (6) mobiles l'un par rapport à l'autre, avec au moins une articulation (8) disposée entre respectivement deux segments de bras (6), par laquelle les deux segments de bras (6) peuvent tourner l'un par rapport à l'autre autour d'un axe de rotation ou de pivotement (10), et avec au moins une unité d'entraînement (12) qui comprend au moins un mécanisme d'entraînement (14) électromagnétique, qui est disposé sur le bras manipulateur (4) dans la zone de l'articulation (8) et qui peut être attribué ou est attribué à l'articulation (8) et qui présente au moins un stator (16) disposé solidairement en rotation sur l'un des deux segments de bras (6) et au moins un rotor (18) disposé solidairement en rotation sur l'autre des deux segments de bras (6), qui tournent autour d'un axe parallèle à l'axe de rotation ou de pivotement (10) de l'articulation (8), notamment aligné avec cet axe d'entraînement (20) pouvant tourner l'un par rapport à l'autre et être fixés l'un par rapport à l'autre, l'axe d'entraînement (20) du mécanisme d'entraînement (14) électromagnétique s'étendant essentiellement transversalement au sens de la longueur de l'un des segments de bras (6) et/ou de l'autre segment de bras (6), **caractérisé en ce que en ce qu'**au moins l'un deux segments de bras (6) comprend une cavité (56) ouverte vers l'extérieur et s'étendant dans le sens de la longueur, ou transversalement à celui-ci, du segment de bras (6), qui débouche et/ou se prolonge dans une cavité (56) d'un autre segment de bras (6) adjacent et relié au segment de bras (6) par l'intermédiaire de l'articulation (8), et **en ce que** soit l'unité d'entraînement (12) comprend un seul mécanisme d'entraînement (14) entre les deux segments de bras (6), le mécanisme d'entraînement (14) de l'unité d'entraînement (12) étant disposé de telle sorte entre l'un des deux segments de bras (6) et l'autre des deux segments de bras (6), que le centre de gravité du mécanisme d'entraînement (14) de l'unité d'entraînement (12) et le centre de gravité du système constitué du segment de bras (6) et de l'autre segment de bras (6) soient disposés sur le même plan transversal à l'axe d'entraînement (20) ou que l'unité d'entraînement (12) comprend au moins deux mécanismes d'entraînement (14) disposés parallèlement l'un à l'autre, qui sont disposés de cette manière entre les deux segments de bras (6), de telle sorte que leurs axes d'entraînement (20) respectifs correspondent entre eux, et de telle sorte que le centre de gravité du système constitué par les deux mécanismes d'entraînement (14) de l'unité d'entraînement (12) et le centre de gravité du système constitué par les deux segments de bras (6) soient disposés sur le même plan transversal à l'axe d'entraînement (20) commun des deux mécanismes d'entraînement (14).

2. Dispositif manipulateur (2) selon la revendication 1, **caractérisé en ce qu'**au moins un mécanisme d'entraînement (14) électromagnétique de l'unité d'entraînement (12) comprend un entraînement direct qui peut être commandé en particulier par une unité de commande, telle qu'un codeur absolu, pour déplacer et/ou fixer au moins un rotor (18) par rapport à au moins un stator (16).

3. Dispositif manipulateur (2) selon la revendication 1 ou 2, **caractérisé en ce que** l'articulation (8) comprend au moins un élément de roulement (54) disposé entre l'un des deux segments bras (6) et l'autre des deux segments de bras (6) de manière à , que le centre de gravité de l'élément de roulement (54) de l'articulation (8) et le centre de gravité du système constitué du segment de bras (6) et de l'autre segment de bras (6) soient disposés sur le même plan transversal à l'axe de rotation ou de pivotement (10) et/ou que l'articulation (8) comprend au moins deux éléments de roulement (54) disposés parallèlement l'un à l'autre, qui sont disposés entre les deux segments de bras (6) de telle sorte que leurs axes de rotation ou de pivotement (10) respectifs correspondent entre eux, et de telle sorte que le centre de gravité du système constitué par les deux éléments de roulement(54) de l'articulation (8) et le centre de gravité du système constitué par les deux segments de bras (6) soient disposés sur le même plan transversalement à l'axe de rotation ou de pivotement (10) commun des deux éléments de roulement (54).

4. Dispositif manipulateur (2) selon au moins l'une des revendications précédentes, **caractérisé en ce qu'**au moins l'un des au moins deux segments de bras (6) comprend au moins un, en particulier deux, élément de suspension en forme d'échafaudage, par lequel des forces agissant transversalement à l'axe de rotation ou de pivotement (10) de l'articulation (8) peuvent être absorbées, et/ou au moins un, en particulier deux, moyen de support qui s'applique à l'élément de suspension en forme d'échafaudage et l'entoure au moins presque ou par sections et par lequel des forces agissant dans le sens de l'axe de rotation ou de pivotement (10) peuvent être absorbées.

5. Dispositif manipulateur (2) selon la revendication 4, **caractérisé en ce qu'**au moins un rotor (18) et/ou au moins un stator (16) d'au moins un mécanisme d'entraînement (14) de l'unité d'entraînement (12) peut être fixé ou est fixé de manière solidaire en rotation sur l'élément de suspension en forme d'échafaudage, **en ce que** l'articulation (8) disposée au moins l'un des deux segments de bras (6) et l'autre segment de bras (6) est disposée au moins partiellement sur l'un au moins des éléments de suspension en forme d'échafaudage et/ou **en ce que** l'élément de suspension en forme d'échafaudage couvre, transversalement au sens de la longueur du segment de bras (6), une épaisseur de 1 à 40 mm, en particulier de 1,5 à 30 mm, notamment de 2 à 20 mm.

6. Dispositif manipulateur (2) selon la revendication 4 ou 5, **caractérisé en ce que** ledit au moins un élément de suspension de type échafaudage comprend un métal, en particulier de l'aluminium, et/ou ledit moyen de support comprend une matière plastique et/ou un composant renforcé par des fibres de carbone.

7. Dispositif manipulateur (2) selon au moins l'une des revendications précédentes, **caractérisé en ce qu'**au moins l'un des au moins deux segments de bras (6) comprend une cavité (56) fermée vers l'extérieur et s'étendant dans le sens de la longueur, ou transversalement à celui-ci, du segment de bras (6), qui débouche et/ou se prolonge notamment dans une cavité (56) d'un autre segment de bras (6) adjacent et relié au segment de bras (6) par l'intermédiaire de l'articulation (8).

8. Dispositif manipulateur (2) selon la revendication 7, **caractérisé par** au moins une arrivée (58) en forme de tuyau ou de câble, à travers lequel de l'énergie, en particulier sous forme électrique, pneumatique ou hydraulique, peut s'écouler et/ou être transportée, et qui peut être disposée ou est disposée dans la cavité (56) et par au moins une arrivée (58) en forme de tuyau ou de câble, en particulier un raccord électrique, pneumatique ou hydraulique, qui peut être disposé dans la cavité (56) du segment de bras (6) et par lequel l'unité d'entraînement (12) ou un élément manipulateur (60), tel qu'un préhenseur ou un outil, peut être relié ou est relié à l'arrivée.

9. Dispositif manipulateur (2) selon au moins l'une des revendications précédentes, **caractérisé en ce que** le bras manipulateur (4) est constitué de plusieurs axes et qu'au moins l'un des deux segments de bras (6) comprend un n-ième segment de bras(6) et l'autre des deux segments de bras(6) comprend un (n+1)-ième segment de bras(6), le (n+1)-ième segment de bras(6) étant fixé de manière à pouvoir tourner autour d'une n-ième articulation (8) avec un n-ième axe de rotation ou de pivotement (10) et/ou au moins un mécanisme d'entraînement (14), notamment électromagnétique, d'une n-ième unité d'entraînement (12) pouvant être disposé ou étant disposé sur la n-ième articulation (8).

10. Dispositif manipulateur (2) selon la revendication 9, **caractérisé en ce qu'**un premier segment de bras(22) est fixé à un socle (24) pour pouvoir tourner autour d'une première articulation (28) comprenant un premier axe de rotation ou de pivotement (26), un deuxième segment de bras(30) est fixé au premier segment de bras(22) pour pouvoir tourner autour d'une deuxième articulation (34) comprenant un deuxième axe de rotation ou de pivotement (32), un troisième segment de bras(36) est fixé au deuxième segment de bras(30) pour pouvoir tourner autour d'une troisième articulation (40) comprenant un troisième axe de rotation ou de pivotement (38), un quatrième segment de bras(42) est fixé au troisième segment de bras(36) pour pouvoir tourner autour d'une quatrième articulation (46) comprenant un quatrième axe de rotation ou de pivotement (44) et un cinquième segment de bras(48) est fixé au quatrième segment de bras(42) pour pouvoir tourner autour d'une cinquième articulation (52) comprenant un cinquième axe de rotation ou de pivotement (50), dans lequel, au moins sur la deuxième articulation (34), la troisième articulation (40) et/ou la cinquième articulation (52), une desdites au moins une unité d'entraînement (12) avec au moins un mécanisme d'entraînement (14) électromagnétique peut être disposée ou est disposée.

11. Dispositif manipulateur (2) selon au moins l'une des revendications précédentes, **caractérisé en ce qu'**au moins un segment de bras (6) du bras manipulateur (4), en particulier le deuxième segment de bras (30), comprend une section transversale en forme d'arc, en particulier en forme de C, dans le sens transversal par rapport à l'axe de rotation ou de pivotement (10) de l'articulation (8).

12. Dispositif manipulateur (2) selon au moins l'une des revendications précédentes, **caractérisé en ce qu'**au moins un segment de bras (6) du bras manipulateur (4), ledit au moins une unité d'entraînement (12) et l'articulation (8) sont conçus de manière essentiellement symétrique, en particulier symétriquement par rapport à un plan transversal à l'axe de rotation ou de pivotement (10) de l'articulation (8), dans lequel est disposé le centre de gravité respectif.
